(19) **Europäisches Patentamt / European Patent Office / Office européen des brevets**

(11) **EP 2 634 146 B1**

(12) **EUROPEAN PATENT SPECIFICATION**

(45) Date of publication and mention of the grant of the patent:
**15.08.2018 Bulletin 2018/33**

(21) Application number: **11836187.2**

(22) Date of filing: **24.10.2011**

(51) Int Cl.:
**C01G 15/00** (2006.01)     **C01G 19/00** (2006.01)
**H01B 1/08** (2006.01)     **C09C 1/00** (2006.01)
**C01G 19/02** (2006.01)     **C09D 5/24** (2006.01)
**B82Y 30/00** (2011.01)

(86) International application number:
**PCT/JP2011/074387**

(87) International publication number:
**WO 2012/057053 (03.05.2012 Gazette 2012/18)**

(54) **INDIUM TIN OXIDE POWDER, METHOD FOR PRODUCING SAME, DISPERSION, PAINT, AND FUNCTIONAL THIN FILM**

INDIUMZINNOXIDPULVER, VERFAHREN ZU SEINER HERSTELLUNG, DISPERSION, FARBE UND FUNKTIONELLE DÜNNSCHICHT

POUDRE D'OXYDE D'INDIUM-ÉTAIN, PROCÉDÉ POUR PRODUIRE CELLE-CI, DISPERSION, PEINTURE, ET COUCHE MINCE FONCTIONNELLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.10.2010 JP 2010239442**

(43) Date of publication of application:
**04.09.2013 Bulletin 2013/36**

(73) Proprietors:
• **Mitsubishi Materials Corporation**
  **Chiyoda-ku**
  **Tokyo 100-8117 (JP)**
• **Mitsubishi Materials Electronic Chemicals Co., Ltd.**
  **Akita-shi**
  **Akita 010-8585 (JP)**

(72) Inventors:
• **SHIRAISHI Shinya**
  **Akita-shi**
  **Akita 010-8585 (JP)**
• **UMEDA Hirotoshi**
  **Akita-shi**
  **Akita 010-8585 (JP)**
• **TAKENOSHITA Ai**
  **Akita-shi**
  **Akita 010-8585 (JP)**

(74) Representative: **Gille Hrabal**
  **Brucknerstrasse 20**
  **40593 Düsseldorf (DE)**

(56) References cited:
**JP-A- 5 201 731      JP-A- 7 021 831**
**JP-A- 8 041 441      JP-A- 2001 261 336**
**JP-A- 2002 068 744   JP-A- 2002 524 374**
**JP-A- 2005 322 626   JP-A- 2007 238 337**
**JP-A- 2007 269 617   JP-A- 2008 110 915**
**JP-A- 2010 092 629**

• **P. SUJATHA DEVI ET AL.: 'Indium tin oxide nano-particles through an emulsion technique' MATERIALS LETTERS vol. 55, August 2002, pages 205 - 210, XP004373845**

Remarks:
The file contains technical information submitted after the application was filed and not included in this specification

EP 2 634 146 B1

**Description**

TECHNICAL FIELD

The present invention relates to an indium tin oxide powder (hereinafter, referred to as an "ITO powder") and a method for producing the same. More particularly, the invention relates to a fine ITO powder, a method for producing the same, a dispersion liquid, a paint, and a functional thin film (a conductive film or a heat ray-shielding film) which contain the ITO powder.

The present application claims priority on Japanese Patent Application No. 2010-239442, filed on October 26, 2010.

BACKGROUND ART

Indium tin oxide is known as a transparent conductive material. For example, Patent Document 1 describes an ITO powder having a Sn/In ratio of 0.005 to 0.3, a specific surface area (BET value) of 10 $m^2$/g or more, a specific resistance of 70 $\Omega$·cm or less, a Cl content of 0.1% or less, a content of Na and K of 10 ppm or less, and a content of free In and Sn of 10 ppm or less. Furthermore, Patent Document 2 describes an ITO powder which has a specific surface area of 4 $m^2$/g to 20 $m^2$/g, and has a color tone in which L is in a range of 82 to 91 in a Lab colorimetric system.

An ITO powder is used as a material for forming a conductive coated film, a conductive layer, a heat ray-shielding layer and the like. For example, a paint is prepared by dispersing an ITO powder in a resin. A conductive coated film is formed by applying this paint on a substrate. In the alternative, a composition is prepared by dispersing an ITO powder in a resin, and this composition is formed into a film. The obtained film is pasted onto a substrate; and thereby, a conductive film is formed. Alternatively, a conductive layer or a heat ray-shielding layer is formed by interposing the film between laminated glasses. In the case where these conductive coated films are formed, in order to increase transparency of the coated films, it is preferable that the ITO powder be a powder that is as fine as possible.

On the other hand, an ITO powder has a tendency that when the primary particle size decreases, crystallinity deteriorates, and the electrical conductivity becomes poor. Therefore, in order to form a coated film having high transparency and high conductivity, a fine ITO powder is required which has a large specific surface area and high crystallinity. However, the ITO powders described in Patent Documents 1 and 2 have specific surface areas of only 20 $m^2$/g, which are not that large. In the case where the specific surface area of the ITO powder is 20 $m^2$/g, the BET diameter is calculated to be 42 nm. In a coated film produced by using such an ITO powder, light scattering occurs, and the haze value of the film is high.

It is known with regard to the ITO that the conductivity is improved by doping tin ($Sn^{4+}$) to indium ($In^{3+}$). Oxygen vacancy points that exist in ITO crystals cause a donor effect, and conductivity is improved by increasing a carrier electron density. In the case where an ITO powder is heat-treated in an inert atmosphere or under reduced pressure, oxygen is removed from the ITO crystals. Thereby, the number of oxygen vacancy points increases, and the volume resistivity of the ITO decreases. Therefore, when surface modification is carried out, the number of oxygen defects increases, and the conductivity can be increased. JP2007238337 A and JP2008110915 A disclose the surface modification of an ITO powder by heat treating the powder in a nitrogen/ammonia atmosphere and in a nitrogen/ water atmosphere, respectively.

Here, conventional products that are currently available in the market are such that products which have high crystallinity and large particle sizes (BET specific surface areas: 20 $m^2$/g, primary particle sizes: 42 nm), and products which have small particle sizes and poor crystallinity (BET specific surface areas: 30 $m^2$/g to 60 $m^2$/g, primary particle sizes: 23 nm, 12 nm). In the particle size distributions of the ITO powders, the median diameters are in a range of 58 nm to 72 nm, and the $D_{90}$ values are in a range of 80 nm to 94 nm. Furthermore, when a dispersion is prepared from a conventional ITO powder, the dispersing time (time required to disperse ITO particles) is long, and the production efficiency is poor. Also, since the dispersing time is long, the crystallinity of ITO is deteriorated, and the conductivity and heat ray-shielding performance become poor. Moreover, conventionally, since dry pulverization after calcination has been carried out in air atmosphere, the surface of the ITO powder is oxidized; and thereby, the conductivity is deteriorated.

PRIOR ART DOCUMENT

Patent Document

Patent Document 1: Japanese Patent No. 3019551
Patent Document 2: Japanese Unexamined Patent Application, First Publication No. 2005-322626

DISCLOSURE OF THE INVENTION

Problems to be Solved by the Invention

The present invention aims to provide an ITO powder which exhibits a small particle size, a sharp particle size distribution and improved crystallinity, a method for producing the ITO powder, a dispersion containing the ITO, and a paint. The present invention also aims to provide a functional thin film (a conductive film or a heat ray-shielding film) containing the ITO, which has a very high film strength, and exhibits markedly satisfactory conductivity and heat ray (infrared ray)-shielding performance. Means for Solving the Problems

The inventors of the present invention solved the problems described above by improving the method for producing an ITO powder, and thus completed the present invention.

The features of aspects of the present invention will be described below.

[1] An indium tin oxide powder, wherein in the particle size distribution, the median diameter is in a range of 30 nm to 45 nm and the $D_{90}$ value is in a range of 60 nm or less, the specific surface area is in a range of 40 $m^2$/g or greater, and the indium tin oxide powder has a color tone of navy blue with L of 30 or less in a L a b colorimetric system.

[2] A dispersion containing: the indium tin oxide powder as described in [1]; and a solvent.

[3] A paint containing: the indium tin oxide powder as described in [1]; a solvent; and a resin.

[4] A functional thin film containing the indium tin oxide powder as described in [1]

[5] The functional thin film as described in [4], which is used as a conductive film or a heat ray-shielding film.

[6] A method for producing an indium tin oxide powder as defined in claim 6.

[7] The method for producing an indium tin oxide powder as described in [6], wherein in the step (A), the indium tin hydroxide is coprecipitated by simultaneously dripping a mixed aqueous solution of indium trichloride and tin dichloride and an aqueous alkali solution to water.

Effects of the Invention

According to the aspect [1] of the present invention, the ITO powder has a small particle size, a sharp particle size distribution, and satisfactory dispersibility. Therefore, the time required to prepare a dispersion can be shortened; and therefore, a decrease in the crystallinity of the ITO powder in the dispersing process can be suppressed. Furthermore, when this ITO powder is used, a functional thin film having high strength, excellent transparency, and excellent conductivity can be produced.

Furthermore, an ITO powder has a decreased L value when reduced. Therefore, the light absorptivity of the ITO powder increases, and the infrared absorption capacity is improved. Furthermore, a transparent conductive film having superior conductivity and excellent heat ray-shielding property can be easily formed.

According to the aspect [6] of the present invention, an ITO powder can be easily produced which has a small particle size and a sharp particle size distribution, and exhibits high dispersibility, high conductivity, and excellent heat ray-shielding property.

BRIEF DESCRIPTION OF THE DRAWINGS

FIG. 1 is a transmission electron microscope photograph of the ITO powder of Example 1.

FIG. 2 is a transmission electron microscope photograph of the ITO powder of Comparative Example 1.

FIG. 3 is an example of the particle size distribution of the ITO powder of Example 1.

FIG. 4 is an example of the particle size distribution of the ITO powder of Comparative Example 1.

FIG. 5 is the X-ray diffraction chart of the ITO powder of Example 1.

FIG. 6 is a magnified view (X-ray diffraction chart) of the X-ray diffraction chart of the ITO powder of Example 1 (FIG. 5) in the range of 20° to 40°.

FIG. 7 is the X-ray diffraction chart of the ITO powder of Comparative Example 1.

FIG. 8 is a magnified view (X-ray diffraction chart) of the X-ray diffraction chart of the ITO powder of Comparative Example 1 (FIG. 7) in the range of 20° to 40°.

FIG. 9 is a graph illustrating the results of shear stress.

BEST MODE FOR CARRYING OUT THE INVENTION

Hereinafter, the present invention will be specifically described based on embodiments. Unless particularly stated otherwise, the unit % representing the content means mass%.

[Indium tin oxide powder]

The ITO powder of the present embodiment has a median diameter of 30 nm to 45 nm, and a $D_{90}$ value of 60 nm or less in a particle size distribution. The median diameter is preferably in a range of 30 nm to 40 nm. The $D_{90}$ value is preferably in a range of 45 nm to 60 nm.

In the case where the median diameter and the D90 value in the particle size distribution are in the ranges described above, the particle size is small, the particle size distribution is sharp (the particle size is uniform), and there are almost no aggregates. Therefore, excellent dispersibility is obtained. Thereby, the time required to prepare a dispersion can be shortened. Furthermore, a film produced by using the ITO powder has high strength, excellent transparency and excellent conductivity.

Here, the median diameter is the particle size at which the cumulative value in a cumulative distribution of the particle size of a powder is 50%. The $D_{90}$ value is the particle size at which the cumulative value in the cumulative distribution of the particle size is 90%. The particle size distribution of the ITO powder is measured by the following method. 60 g of an ITO powder is dispersed in 60 $cm^3$ of water as a dispersing medium for 3 hours by using a paint shaker manufactured by Asada Iron Works Co., Ltd. 50x$10^{-3}$ $cm^3$ of the obtained dispersion is diluted in 50 $cm^3$ of water, and the particle size distribution is measured by using a dynamic light scattering particle size distribution analyzer manufactured by Horiba, Ltd. (product No.: LB-550). From the obtained particle size distribution, the median diameter and the $D_{90}$ value are calculated.

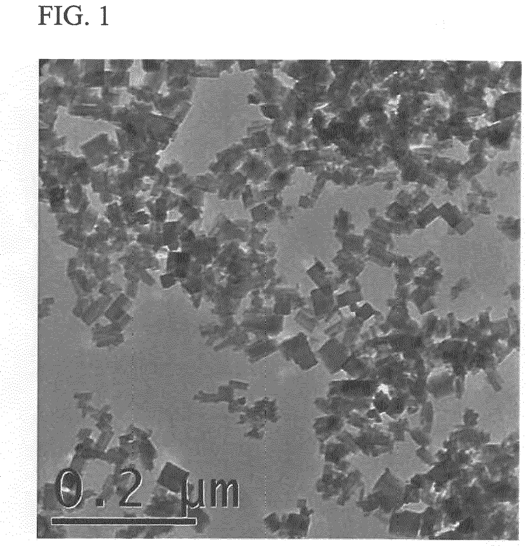

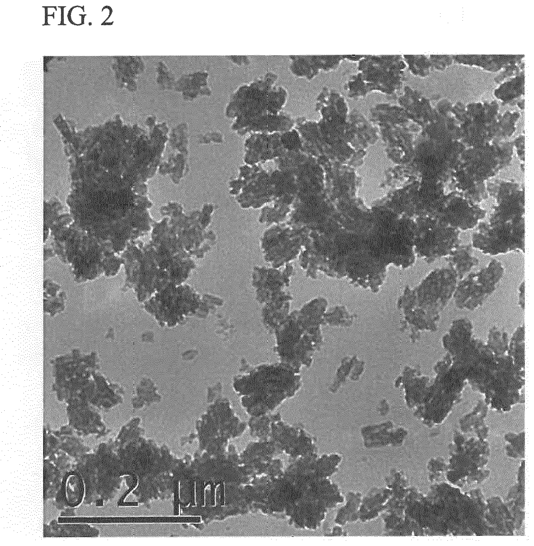

The shape of the ITO powder is preferably spherical or dice-shaped (cubic). FIG. 1 shows a transmission electron microscope photograph of the ITO powder of Example 1, and FIG. 2 shows a transmission electron microscope photograph of Comparative Example 1. As can be seen from FIG. 1, the ITO powder of Example 1 has a small particle size, and is uniformly and independently dispersed. On the contrary, the ITO powder of Comparative Example 1 is aggregated, and the particle size is non-uniform.

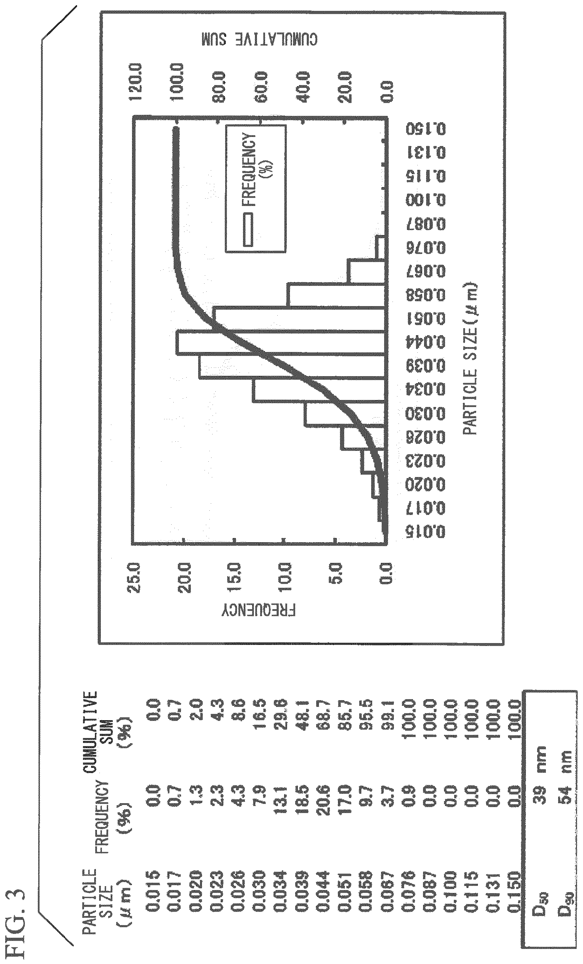

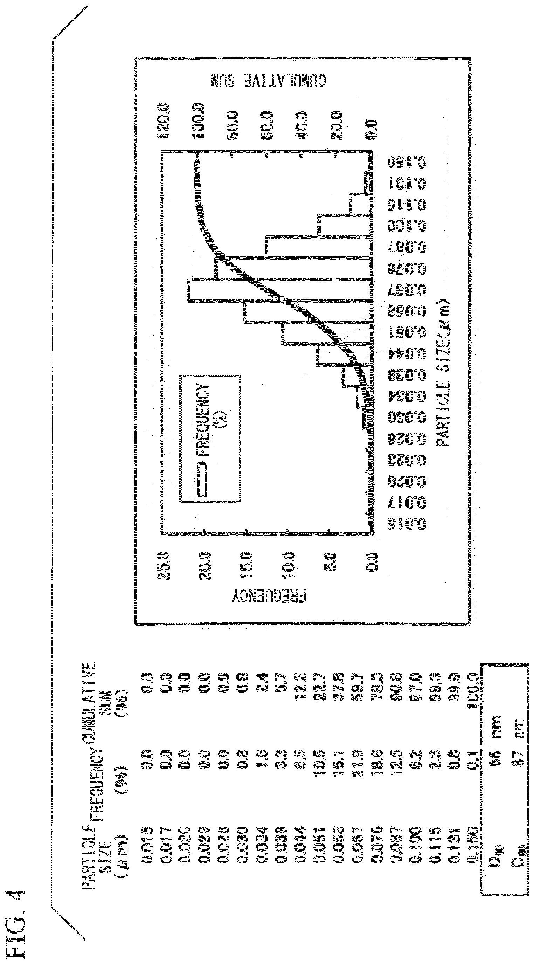

FIG. 3 illustrates an example of the particle size distribution of the ITO powder of Example 1, and FIG. 4 illustrates an example of the particle size distribution of the ITO powder of Comparative Example 1. In FIG. 3 and FIG. 4, the line graph represents the integrated value (cumulative value) (%) of the right axis (cumulative distribution), and the bar graph represents the frequency (%) of the left axis (frequency distribution). In FIG. 3, the median diameter is 39 nm, and the $D_{90}$ value is 54 nm. In FIG. 4, the median diameter is 65 nm, and the $D_{90}$ value is 87 nm. As such, the ITO powder of the present embodiment has a small particle size and a sharp particle size distribution.

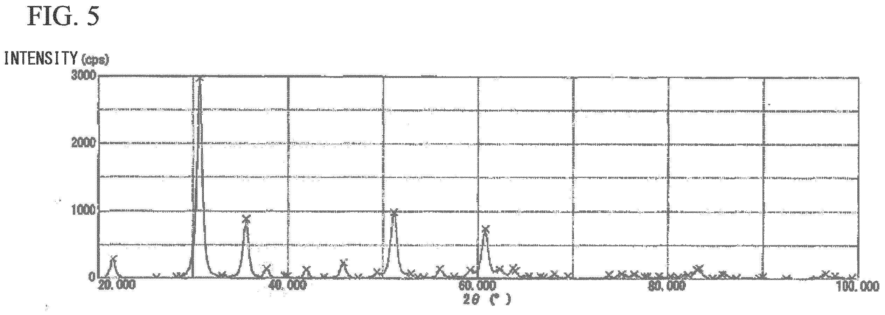

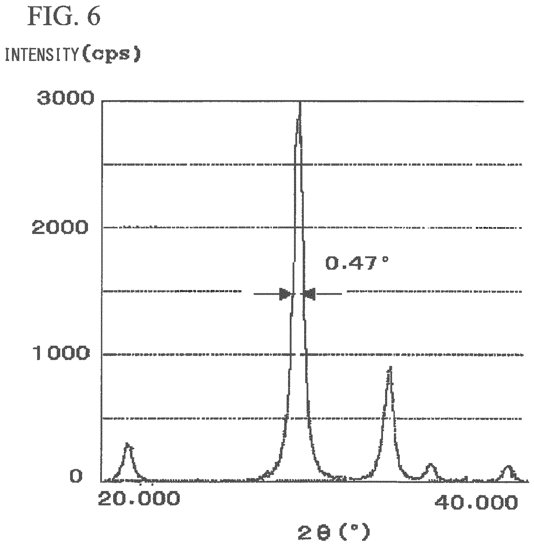

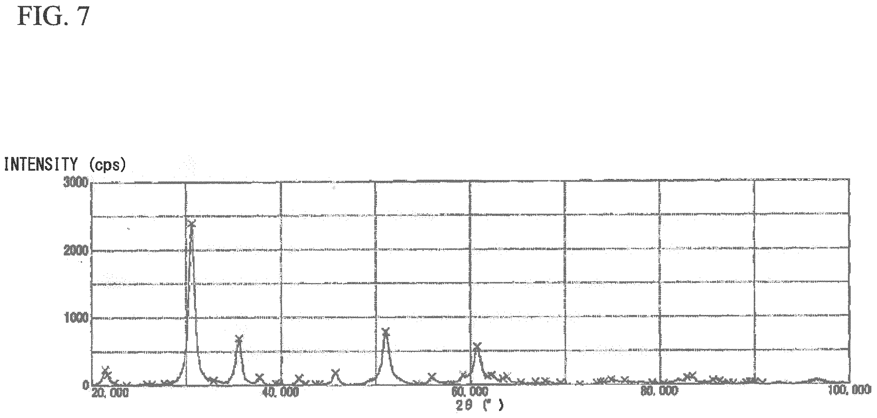

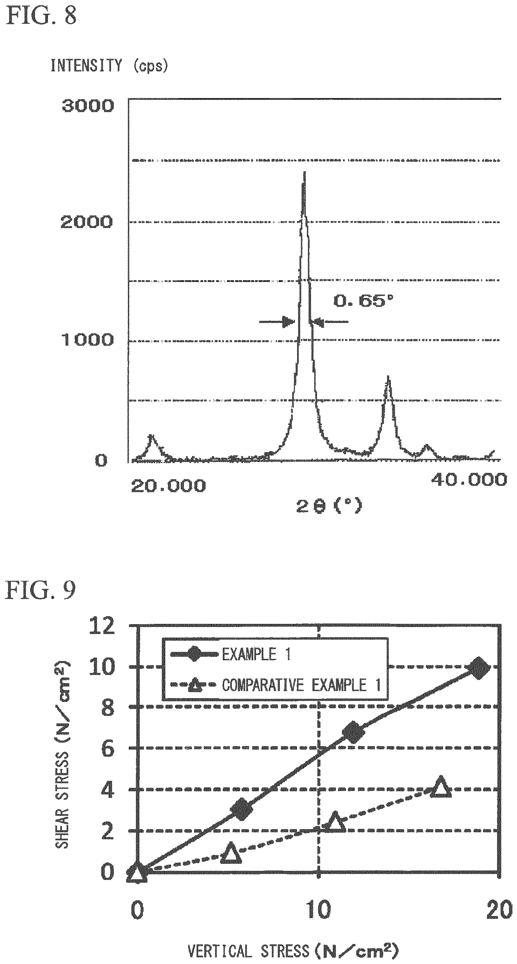

FIG. 5 shows the X-ray diffraction chart of the ITO powder of Example 1, and FIG. 6 shows a magnified view of the X-ray diffraction chart of the ITO powder of Example 1 (FIG. 5) in the range of 20° to 40°. Furthermore, FIG. 7 shows the X-ray diffraction chart of the ITO powder of Comparative Example 1, and FIG. 8 shows a magnified view of the X-ray diffraction chart of the ITO powder of Comparative Example 1 (FIG. 7) in the range of 20° to 40°. As shown in FIG 5, in the X-ray diffraction chart of the ITO powder of Example 1, the relative intensity of the diffraction peak of (222) plane ($2\theta$ = about 31°) is high (about 3000 cps). Also, as shown in FIG 6, the half width (full width at half maximum) in the diffraction peak of the (222) plane is smaller than 0.6° (specifically, 0.47°). On the other hand, as shown in FIG. 7, in the X-ray diffraction chart of the ITO powder of Comparative Example 1, the relative intensity of the diffraction peak of (222) plane is 2500 cps or less. Also, as shown in FIG. 8, the half width (full width at half maximum) in the diffraction peak of the (222) plane is larger than 0.6° (specifically, 0.65°). As such, the half width in the diffraction peak of (222) plane of the ITO powder of the present embodiment is much smaller than that of the ITO powder of Comparative Example 1. Therefore, the ITO powder of the present embodiment is a highly crystalline powder.

The ITO powder has a specific surface area of 40 $m^2$/g or greater, and a color tone of navy blue with L (L-value) of 30 or less in a L a b colorimetric system (L a b color system). The specific surface area is preferably in a range of 60 $m^2$/g to 85 $m^2$/g, and more preferably in a range of 70 $m^2$/g to 85 $m^2$/g.

When the ITO powder which fulfills these property values is used, a film having excellent conductivity and excellent heat ray-shielding property can be produced.

Here, the specific surface area is measured by the BET method. The L is measured by using, for example, an apparatus manufactured by Suga Test Instruments Co., Ltd. (SM-7-IS-2B).

Furthermore, the mass ratio [Sn/(Sn+In)] of the tin (Sn) content with respect to the sum of the contents of Sn and indium (In) in the ITO powder is preferably in a range of 1% to 20%, and more preferably in a range of 5% to 20%. In the case where the mass ratio of the Sn content is less than 1%, the conductivity and the heat ray-shielding property tend to deteriorate. Also, since the proportion of the In component increases, the process requires high cost. On the other hand, in the case where the mass ratio of the Sn content is more than 20%, the conductivity and the heat ray-shielding property tend to deteriorate similarly to the case described above; and therefore, it is not preferable.

[Method for producing indium tin oxide powder]

The method for producing an indium tin oxide powder of the present embodiment includes: a step (A) of obtaining an indium tin hydroxide by coprecipitation; a step (B) of drying and calcining the indium tin hydroxide, and thereby, obtaining indium tin oxide; and a step (C) of dry pulverizing the obtained indium tin oxide in a nitrogen atmosphere, in this order. More particularly, in the step (A), coprecipitation is carried out by using a tin ($Sn^{2+}$) compound under conditions where a pH is in a range of 4.0 to 9.3, and a liquid temperature is in a range of 5°C or higher. Thus, an indium tin hydroxide is produced by coprecipitation, and the indium tin hydroxide has, in a dried powder state, a color tone ranging from bright yellow to the color of persimmon (reddish brown or orange-red).

[Step (A)]

A mixed aqueous solution containing indium ions and tin ions is mixed with an aqueous alkali solution, and the indium ions and the tin ions in the mixture (aqueous reaction solution) are precipitated in the presence of an alkali. Thereby, a coprecipitated hydroxide of indium and tin (indium tin hydroxide) is produced.

The mixed aqueous solution containing indium ions and tin ions is prepared by using a tin ($Sn^{2+}$) compound ($SnCl_2 \cdot H_2O$ or the like).

Examples of the tin ($Sn^{2+}$) compound include inorganic salts such as stannous fluoride, stannous chloride, stannous borofluoride, stannous sulfate, stannous oxide, stannous nitrate, tin pyrophosphate, tin sulfamate, and stannites; and organic salts such as stannous alkanolsulfonates, stannous sulfosuccinate, and stannous aliphatic carboxylates. Among these, in the case where stannous chloride is used, a coprecipitate having high crystallinity is obtained, and industrialization is facilitated; and therefore, stannous chloride is preferable.

Regarding the raw material of indium ions, indium trichloride ($InCl_3$) or indium nitrate are used. When a comparison is made between indium nitrate and indium chloride, a coprecipitated oxide which exhibits excellent crystallinity is obtained in the case where indium chloride is used.

The pH of the aqueous reaction solution (mixed solution of the mixed aqueous solution containing indium ions and tin ions and the aqueous alkali solution) is adjusted to be in a range of 4.0 to 9.3, and preferably in a range of 6.0 to 8.0, and the liquid temperature is adjusted to be in a range of 5°C or higher, and preferably in a range of 10°C to 80°C. Thereby, an indium tin hydroxide can be coprecipitated which has, in a dried powder state, a color tone ranging from bright yellow to color of persimmon. In the case where an indium tin hydroxide has, in a dried powder state, a color tone ranging from bright yellow to color of persimmon, the indium tin hydroxide has a more uniform particle size, exhibits excellent crystallinity, and individual particles are independently dispersed therein, as compared with conventional white indium tin hydroxide.

In the case where a tin ($Sn^{4+}$) compound ($SnCl_4$ or the like) is used as a raw material of tin ions, a white precipitate (indium tin hydroxide) is produced, and a precipitate is not obtained which has, in a dried powder state, a color tone ranging from bright yellow to color of persimmon. Furthermore, in the case where the pH of the aqueous reaction solution is lower than 4.0 (acidic side), or in the case where the pH of the aqueous reaction solution is higher than 9.3 (alkali side), a yellowish white precipitate (indium tin hydroxide) is produced, and a precipitate is not obtained which has, in a dried powder state, a color tone ranging from bright yellow to color of persimmon. Both of the white precipitate obtained by using a tin ($Sn^{4+}$) compound, and the yellowish white precipitate have a non-uniform particle size, exhibit low crystallinity, and particles are not independently dispersed therein, as compare with the precipitate having a color tone ranging from bright yellow to color of persimmon. Even if these precipitates are calcined, an ITO powder which has a uniform particle size, exhibits high crystallinity, and has particles independently dispersed therein, such as the ITO powder of the present embodiment, cannot be obtained. Meanwhile, in the production method of Patent Document 1, since tin tetrachloride is used, a white precipitate of indium tin hydroxide is produced, and a precipitate which has, in a dried powder state, a color tone ranging from bright yellow to color of persimmon is not obtained.

In order to control the pH of the aqueous reaction solution during the reaction to be in a range of 4.0 to 9.3, for example, it is preferable to simultaneously drip (add in a dropwise manner) a mixed aqueous solution containing indium ions and tin ions and an aqueous alkali solution to water in a container. Alternatively, it is preferable to drip the mixed aqueous solution to the aqueous alkali solution. As the mixed aqueous solution, a mixed aqueous solution of indium trichloride ($InCl_3$) and tin dichloride ($SnCl_2 \cdot 2H_2O$) as described above is preferably used. As the aqueous alkali solution, an aqueous ammonia ($NH_3$) solution, an aqueous solution of ammonium hydrogen carbonate ($NH_4HCO_3$), an aqueous solution of KOH, an aqueous solution of NaOH, or the like can be used.

Specifically, for example, in the case where a mixed aqueous solution is prepared by using tin dichloride as the tin ($Sn^{2+}$) compound, the pH of the aqueous reaction solution is adjusted to be 7, and the liquid temperature is adjusted to be in a range of 10°C to 60°C, a precipitate is produced which has, in a dried powder state, a color tone ranging from bright yellow to color of persimmon.

On the other hand, in the case where the pH of the aqueous reaction solution is lower than 4 (for example, pH 3), or in the case where the pH of the aqueous reaction solution is higher than 9.3 (for example, pH 9.5), a yellowish white precipitate is produced.

Therefore, in order to produce a coprecipitate of indium tin hydroxide which has, in a dried powder state, a color tone ranging from bright yellow to color of persimmon, it is necessary to adjust the pH of the aqueous reaction solution to be in a range of 4.0 to 9.3. Meanwhile, as the pH is closer to neutrality, the precipitate tends to have a color tone of color of persimmon in a dried powder state. Also, even in the case where the pH is in a range of 4.0 to 9.3 (for example, pH 8), when tin tetrachloride is used, a white precipitate is produced.

In the mixed aqueous solution containing indium ions and tin ions, the mass ratio [Sn/(Sn+In)] of the Sn content with respect to the sum of the contents of Sn and In is preferably in a range of 1% to 20%, and more preferably in a range of 5% to 20%.

It is preferable to adjust the contents of Sn and In in the mixed aqueous solution such that the content of the produced indium tin hydroxide becomes in a range of 0.01 parts by mass to 25 parts by mass relative to 100 parts by mass of the aqueous reaction solution. The content of the produced indium tin hydroxide is more preferably in a range of 0. 1 parts by mass to 25 parts by mass, and most preferably in a range of 1 part by mass to 25 parts by mass. As the content of the produced indium tin hydroxide is smaller, and as the amount of the aqueous reaction solution is larger, a fine ITO powder can be produced more easily; however, productivity becomes poor. In the case where the content of the produced indium tin hydroxide is more than 25 parts by mass, aggregation of indium tin hydroxide occurs during the reaction, and coarse particles are produced. Also, the slurry has a high viscosity, and productivity decreases.

The produced coprecipitate of indium tin hydroxide is washed by using pure water or ion-exchanged water. The coprecipitate is washed until the electrical resistivity of a supernatant reaches 5,000 $\Omega \cdot$cm or higher, and preferably 50,000 $\Omega \cdot$cm or higher, and then solid-liquid separation is performed, and the aforementioned coprecipitate is collected. In the case where the electrical resistivity of the supernatant is lower than 5000 $\Omega \cdot$cm, impurities such as chlorine are not sufficiently removed, and a high purity ITO powder cannot be obtained.

The indium tin hydroxide has a color tone ranging from bright yellow to color of persimmon in a dried powder state, and in a L a b colorimetric system, $L \leq 80$, a = -10 to +10, and $b \geq +26$. For example, L = 60 to 75, a = -2.5 to +1.5, and b = +22 to +32. Meanwhile, the color tone of a white precipitate is such that, for example, L = 91 to 100 in a L a b colorimetric system.

[Step (B)]

The indium tin hydroxide is heated and calcined simultaneously with drying, simultaneously with calcination, or after calcination, in an atmosphere of nitrogen gas only, or in an atmosphere of nitrogen gas containing an alcohol. Thereby, surface modification is conducted, and thus an indium tin oxide powder is obtained which has a specific surface area of 40 m$^2$/g or greater and a color tone of navy blue. It is essential to perform the surface modification in this manner from the viewpoints of conductivity and heat ray-shielding property.

The above-described surface modification can be carried out, for example, as 25 follows. In the case of carrying out surface modification simultaneously with drying, for example, the indium tin hydroxide obtained in the step (A) is heated in an atmosphere of nitrogen gas only, or in an atmosphere of nitrogen gas containing an alcohol, at a temperature of 250°C to 800°C for 30 minutes to 6 hours, without performing drying in the air. In this case, drying and calcination are simultaneously carried out by the heat treatment of the surface modification. On the other hand, in the case of performing surface modification at a low temperature and then performing calcination, it is preferable to carry out the calcination not in air, but in an inert atmosphere.

The flow rate of the atmosphere gas in this process of surface modification is such that the linear velocity is in a range of 8 x 10$^{-6}$ m/s or greater, preferably in a range of 5x10$^{-5}$ m/s to 10 m/s, and more preferably in a range of 5$\times$10$^{-5}$ m/s to 1 m/s. Thereby, the ITO powder can be micronized, the specific surface area can be increased, and also a particle size distribution with a uniform particle size (a sharp particle size distribution) is obtained. Also, excellent conductivity is obtained. In the case where a nitrogen treatment (surface modification) is carried out in a state where the powder is mounted in a container, the powder is scattered if the flow rate of the atmosphere gas is excessively large. Therefore, the flow rate of the atmosphere gas is preferably a linear velocity of 1 m/s or less. In the case where a nitrogen treatment (surface modification) is carried out while the indium tin hydroxide inside a heating furnace is fluidized by vibration or by the flow of the atmosphere gas so as to form a fluidized bed, the flow rate of the atmosphere gas is preferably a linear velocity of 0.01 m/s to 10 m/s.

In the case of carrying out surface modification simultaneously with calcination, for example, the step (B) is carried out as follows. At first, indium tin hydroxide is dried at a temperature of 100°C to 110°C for 10 hours in air. Subsequently, calcination is not carried out in air, and the indium tin hydroxide is heated in an atmosphere of nitrogen gas only, or in an atmosphere of nitrogen gas containing an alcohol, at a temperature of 250°C to 800°C for 30 minutes to 6 hours.

In the case of carrying out surface modification after calcination, for example, the step (B) is carried out as follows. At first, indium tin hydroxide is dried and calcined in air. Subsequently, heating is performed in an atmosphere of nitrogen gas only, or in an atmosphere of nitrogen gas containing an alcohol, at a temperature of 250°C to 800°C for 30 minutes to 6 hours.

The surface-modified indium tin oxide has a specific surface area according to the BET method of 40 $m^2/g$, and preferably 60 $m^2/g$. Also, the color is navy blue, and L $\leq$ 30, a < 0, and b < 0 in a L a b colorimetric system. When an indium tin oxide which fulfills these ranges is used, a coated film excellent in transparency, conductivity, and heat ray-shielding property can be formed.

[Step (C)]

The obtained indium tin oxide is subjected to dry pulverizing in a nitrogen atmosphere. The method of dry pulverization is not particularly limited, and the dry pulverization can be carried out by using apparatuses that are known to those skilled in the art, such as a hammer mill (for example, a hammer type fine pulverizer), a jet mill, a ball mill, a pin mill, and a mortar. Through this pulverization process, the median diameter and the $D_{90}$ value in the particle size distribution of the ITO powder can be adjusted to desired values.

In accordance with the above-described production method, an indium tin oxide powder having a small particle size and a sharp particle size distribution can be easily produced.

The ITO powder of the present embodiment can be supplied in the form of a dispersion, a paint, a paste or the like that will be described below.

[Dispersion]

The dispersion of the present embodiment contains the above-described ITO powder of the present embodiment, and a solvent. Examples of the solvent include water, ethanol, methanol, isopropyl alcohol, toluene, methyl ethyl ketone, and propylene glycol monomethyl ether. The content of the ITO powder is in a range of 1% to 70% by mass, and preferably in a range of 10% to 50% by mass. The pH of the dispersion is in a range of 2 to 10, and preferably in a range of 3 to 5.

The dispersion may contain various conventionally used additives to the extent that the purpose of the embodiment is not impaired. Examples of such additives include a dispersant, a dispersion aid, a polymerization inhibitor, a curing catalyst, an oxidation inhibitor, a leveling agent, and a film-forming resin.

[Paint]

The paint (paste) of the present embodiment contains the above-described dispersion of the present embodiment, and a resin. Since the ITO powder of the present embodiment has excellent dispersibility, the dispersion energy can be reduced when the dispersion is formed into a paint (conversion into a paint).

Examples of the resin include a polyvinyl alcohol resin, a vinyl chloride-vinyl acetate resin, an acrylic resin, an epoxy resin, a urethane resin, an alkyd resin, a polyester resin, an ethylene-vinyl acetate copolymer, an acrylate-styrene copolymer, a cellulose resin, a phenolic resin, an amino resin, a fluororesin, a silicone resin, a petroleum resin, and natural resins such as shellac, rosin derivatives and rubber derivatives.

The blending quantity of the ITO powder to the resin is in a range of 0. 1 parts by mass to 950 parts by mass, and preferably in a range of 0.7 parts by mass to 800 parts by mass, relative to 100 parts by mass of the resin. The content of the ITO powder is appropriately adjusted in accordance with the electrical resistivity or the film thickness which is required from the film formed by using the paint.

[Functional thin film]

The functional thin film of the present embodiment contains the ITO powder of the present embodiment. The functional thin film is formed by applying the above-described dispersion or the paint of the present embodiment on a substrate or the like.

Regarding the substrate, those substrates that are widely used in various fields such as electric and electronic instruments may be used. Specifically, substrates formed from various synthetic resins, glass, ceramics and the like may be used. The shape of the substrate is not particularly limited, and any arbitrary shape such as a sheet form, a film form, or a plate form can be employed. Specific examples of the synthetic resin include polyethylene, polypropylene, polycarbonate, a polyethylene terephthalate (PET) resin, an acrylic resin, a methacrylic resin, polyvinyl chloride, a polyester resin, a polyamide resin, and a phenolic resin; however, the synthetic resin is not limited thereto.

The dispersion and the paint is applied on the substrate by a routine method. Examples of the application method include roll coating, spin coating, screen printing, and application methods using an instrument such as an applicator. Subsequently, the coated film is heated as necessary, the solvent is evaporated, and the coated film is dried to cure. In order to cure the coated film, not only heating is performed, but ultraviolet radiation may also be irradiated.

In the case where the functional thin film is a coated film formed by applying the dispersion and does not contain a resin, the thickness of the functional thin film is preferably in a range of 0.1 $\mu$m to 5 $\mu$m, and more preferably in a range of 0.5 $\mu$m to 2 $\mu$m from the viewpoints of transparency, conductivity, and infrared ray-shielding property. In the case where the functional thin film contains a resin, there are no limitations on the thickness.

The functional thin film of the present embodiment is excellent in transparency, conductivity, and infrared shielding property, and the functional thin film can be used as a conductive film or a heat ray-shielding film. Specifically, the functional thin film can be widely applied to displays, touch panels, windowpanes for various vehicles such as a car, windowpanes for constructions, glass plates for various apparatuses such as medical instruments, and transparent parts for general packages or showcases.

EXAMPLES

Hereinafter, the present invention will be described in detail by referring to Examples; however, the present invention is not limited to Examples.

Measurement of the particle size distribution was carried out by the following method. At first, 60 g of an ITO powder was dispersed in 60 cm$^3$ of water as a dispersion medium for 3 hours, by using a paint shaker manufactured by Asada Iron Works Co., Ltd. 50×10$^{-3}$ cm$^3$ of the obtained dispersion was diluted in 50 cm$^3$ of water, and the particle size distribution was measured by using a dynamic light scattering particle size distribution analyzer manufactured by Horiba, Ltd. (product No.: LB-550) under the following conditions.

(Measurement conditions)

Number of data reading: 100 times, number of repetition: 50 times, basis of particle size: volumetric basis, measurement temperature: 24.5°C to 25.5°C

The median diameter (50% integrated particle size) and the $D_{90}$ (90% integrated particle size) were calculated from the measured particle size distribution.

[Example 1]

50 cm$^3$ of an aqueous solution of indium chloride ($InCl_3$) (In content: 18 g) and 3.6 g of tin dichloride ($SnCl_2 \cdot 2H_2O$) were mixed so as to prepare a mixed aqueous solution. Also, an aqueous ammonia ($NH_3$) solution was prepared as an aqueous alkali solution. In a container containing 500 cm$^3$ of water, the mixed aqueous solution and the aqueous ammonia ($NH_3$) solution were dripped simultaneously. The added amount of the aqueous alkali solution was controlled so as to adjust the pH of the mixture (aqueous reaction solution) in the container to be 7, and the liquid temperature was adjusted to 30°C. Thus, the mixture was allowed to react for 30 minutes. The produced precipitate was repeatedly subjected to decantation by using ion-exchanged water. More specifically, in the decantation, operations of discarding the supernatant, subsequently introducing fresh ion-exchanged water, mixing, and leaving the mixture to stand were carried out; and thereby, washing of the precipitate was carried out. When the electrical resistivity of the supernatant reached 50,000 $\Omega \cdot$cm or higher, the precipitate (In/Sn coprecipitated hydroxide) was separated by filtration; and thereby, a coprecipitated indium tin hydroxide was obtained. It was found that the coprecipitated indium tin hydroxide had the color of persimmon (reddish brown or orange-red) in a dried powder state.

The indium tin hydroxide that has been obtained by solid-liquid separation was dried overnight at 110°C, and then was calcined at 550°C for 3 hours in air. Aggregates of the obtained calcination product were broken by pulverization, and about 25 g of a bright yellow ITO powder was obtained.

The L a b values and the specific surface area of this ITO powder are shown in Table 1.

Next, 25 g of the ITO powder was placed in a glass Petri dish and was subjected to a surface modification treatment by heating at 330°C for 2 hours in a nitrogen gas atmosphere containing ethanol and water vapor.

The color tone (L, a, and b) and the BET value of the surface-modified ITO powder are shown in Table 1.

Furthermore, the surface-modified ITO powder was subjected to a dry pulverization treatment by using an agate mortar in a booth under a nitrogen atmosphere.

Also, 20 lots of the ITO powder obtained in Example 1 were produced and uniformly mixed. Subsequently, a surface modification treatment was carried out in the same manner as the method described above. A dry pulverization treatment was carried out by using a hammer type fine pulverizer (apparatus name: Laboratory Mill LM05 manufactured by Dalton Co., Ltd.) in a nitrogen atmosphere; and thereby, 500 g of an ITO powder (an ITO powder that had been subjected to a surface modification treatment and a dry pulverization treatment) was obtained.

50 g of the ITO powder that had been subjected to a surface modification treatment and a dry pulverization treatment was dispersed in 50 g of water; and thereby, a dispersed aqueous solution was prepared. This dispersed aqueous solution was diluted with ethanol; and thereby, a dispersion having an ITO powder concentration of 10% was obtained. This ITO dispersion was applied on a glass plate by spin coating with 150 rpm; and thereby, a film was formed (ITO concentration: 10%). Furthermore, a silica sol-gel liquid (silica: 1%) was applied on the coated film of the dispersion by spin coating with 150 rpm; and thereby, a film was formed thereon. Subsequently, the glass plate on which the coated films were formed was calcined at 160°C for 30 minutes; and thereby, a coated film was formed (thickness 0.2 $\mu$m).

[Measurement of dispersion retention time]

The dispersion retention time at the time of preparation of the dispersion was calculated by the following formula. The relative values normalized by designating the dispersion retention time of Comparative Example 1 as 100 are indicated in Table 3.

$$\text{(dispersion retention time)} = \text{(dispersion time)}/\{\text{(volume of dispersion)}/\text{(effective capacity of mill)}\}$$

Here, the unit used for the "dispersion time" is "hours", and the same unit (for example, "cm$^3$") is used for the "volume of dispersion" and "effective capacity of mill".

[Measurement of total light transmittance and surface resistivity]

The total light transmittance and the surface resistivity of the glass plate on which the coated film was formed were measured. These results are shown in Table 3. The surface resistivity was measured with Resta AP (MCP-T400) manufactured by Mitsubishi Chemical Corp. The total light transmittance was measured in a visible region of 400 nm to 750 nm according to the standards (JIS K7150) by using an apparatus manufactured by Suga Test Instruments Co., Ltd. (HGM-3D). The measured value of the total light transmittance includes a transmittance of the glass plate (the transmittance of the glass plate: 89.0%, the thickness: 1 mm), and the measured value is a value in the film thickness of 0.2 $\mu$m. In Table 3, a value ($\Delta$ transmittance) that is obtained by subtracting the transmittance (89.0%) of the glass plate from the measured value of the total light transmittance is also shown.

For the dispersions of ITO powder indicated in Table 3, the visible light transmittance (%Tv), the solar transmittance (%Ts), and the haze were measured. The measurement methods will be described below.

[Evaluation of visible light transmittance and solar transmittance]

0.020 g of distilled water, 23.8 g of triethylene glycol di-2-ethylhexanoate [3G], 2.1 g of anhydrous ethanol, 1.0 g of phosphoric acid polyester, 2.0 g of 2-ethylhexanoic acid, and 0.5 g of 2,4-pentanedione were mixed; and thereby, a mixed liquid was prepared. 20 g of an ITO powder was added to this mixed liquid and was dispersed therein.

The prepared dispersion was diluted with triethylene glycol di-2-ethylhexanoate; and thereby, a diluted solution having an ITO powder content of 0.7 mass% (sample for spectroscopic characteristics analysis) was prepared. This diluted solution was put into a glass cell having an optical path length of 1 mm, and the visible light transmittance (%Tv) in a wavelength range of 380 nm to 780 nm and the solar transmittance (%Ts) in a wavelength range of 300 nm to 2100 nm were measured according to the standards (JIS R 3216-1998) by using a self-recording spectrophotometer (U-4000 manufactured by Hitachi, Ltd.). These results are shown in Table 3.

[Measurement of haze]

A diluted solution was prepared in the same manner as in the case of the sample for spectroscopic characteristics analysis. The haze value of the diluted solution was measured according to the standards (JIS K7136) by using a haze computer (Hz-2 manufactured by Suga Test Instruments Co., Ltd.). This result is shown in Table 3.

[Reference Example 1]

The process was carried out under the same conditions as in Example 1 up to the process of surface modification. Subsequently, dry pulverization was carried out in air by using a hammer type fine pulverizer (apparatus name: Laboratory Mill LM05 manufactured by Dalton Corporation). Evaluations of the characteristics (an evaluation of conductivity, an evaluation of heat ray-shielding property, and the like) were carried out in the same manner as in Example 1. These results are shown in Table 1 and Table 3.

[Comparative Example 1]

An aqueous solution of $SnCl_4$ having a concentration of 55% was prepared by using tin tetrachloride as a tin compound. 14.4 g of this aqueous solution of $SnCl_4$ was mixed with 90 cm$^3$ of an aqueous solution of indium chloride ($InCl_3$) (containing 35 g of In metal); and thereby, a mixed aqueous solution was prepared. 0.6 dm$^3$ of an aqueous alkali solution containing 190 g of ammonium hydrogen carbonate ($NH_4HCO_3$) was added to the mixed aqueous solution; and thereby, a mixture (aqueous reaction solution) was obtained. While the pH of the aqueous reaction solution was adjusted to be 8 and the liquid temperature was adjusted to be 30°C, the mixture was allowed to react for 30 minutes. A precipitate thus produced was subjected to decantation with ion-exchanged water. When the electrical resistivity of the supernatant reached 50,000 Ω·cm or higher, a coprecipitated indium tin hydroxide was separated by filtration. This coprecipitated indium tin hydroxide was white in color.

This coprecipitated indium tin hydroxide was dried overnight at 110°C, and then calcination was performed at 550°C for 3 hours in air. Aggregates in the obtained calcination product were broken by pulverization; and thereby, about 44 g of an ITO powder was obtained.

Subsequently, 25 g of the ITO powder was placed in a glass Petri dish and was subjected to a surface modification treatment by heating at 330°C for 2 hours in a nitrogen gas atmosphere containing ethanol and water vapor.

The color tone (Lab values (L, a, and b)) and the specific surface area (BET value) of the surface-modified ITO powder are shown in Table 2.

The surface-modified ITO powder was dry pulverized in air atmosphere. For the ITO powder that had been subjected to the surface modification treatment and the dry pulverization treatment, an evaluation of conductivity, an evaluation of heat ray-shielding property, a haze measurement, and the like were carried out. These results are shown in Table 3.

[Comparative Example 2]

An ITO powder was produced in the same manner as in Comparative Example 1, except that the powder was dry pulverized not in air but in a nitrogen atmosphere, and an evaluation of conductivity, an evaluation of heat ray-shielding property, and the like were carried out. These results are shown in Tables 2 and 4.

[Examples 2 to 5 and Comparative Examples 3 to 6]

ITO powders were produced in the same manner as in Example 1, except that the conditions described in Table 1 were applied, and an evaluation of conductivity, an evaluation of heat ray-shielding property, and the like were carried out. These results are shown in Tables 1 to 4.

[Powder molding test]

The ITO powders of Example 1 and Comparative Example 1 were subjected to a powder molding test as follows.

    1. 10 g of a powder was filled in a 20-mmϕ mold.
    2. A molding pressure of 200 MPa was applied to the mold.
    3. A molding product was removed from the mold.
    4. The condition of the molding product (cracking, detachment and the like) was visually inspected.

In this test, a powder having high shear stress is not likely to cause cracking, detachment or the like in the molding product.

[Measurement of shear stress]

Shear stresses of the ITO powders of Example 1 and Comparative Example 1 were measured by using a powder bed shear stress analyzer NS-S500 manufactured by Nano Seeds Corporation. The height of the cell used in a high load shear test was 30 mm, and measurement was carried out by applying a force of 50 N, 100 N, or 150 N as a vertical load. In addition, measurement was made under conditions where a plunge speed to the cell was 0.2 mm/second, a plunge gap was 0.05 mm, and a transverse slide speed was 10 μm/second. These results are shown in Table 5 and FIG. 9.

Table 1

| | Example 1 | Example 2 | Example 3 | Example 4 | Example 5 | Reference Example 1 |
|---|---|---|---|---|---|---|
| In raw material | $InCl_3$ | $InCl_3$ | $InCl_3$ | $InCl_3$ | $InCl_3$ | $InCl_3$ |
| Sn raw material | $SnCl_2$ | $SnCl_2$ | $SnCl_2$ | $SnCl_2$ | $SnCl_2$ | $SnCl_2$ |
| Aqueous alkali solution | $NH_3$ | $NH_3$ | $NH_3$ | $NH_3$ | $NH_3$ | $NH_3$ |
| pH of mixed liquid | 7 | 7 | 4.5 | 8.5 | 7.0 | 7 |
| Liquid temperature | 30°C | 20°C | 30° 30°C | 30°C | 40°C | 30°C |
| Color tone of coprecipitate | Color of persimmon | Color of persimmon | Bright yellow | Color of persimmon | Bright yellow | Color of persimmon |
| L | 75.1 | 73.1 | 66.0 | 65.0 | 64.3 | 75.1 |
| a | -1.5 | -1.2 | -2.3 | 4.2 | -1.0 | -1.5 |
| b | 30.7 | 31.1 | 32.2 | 21.9 | 28.9 | 30.7 |
| Color tone of ITO powder | Bright yellow | Bright yellow | Bright yellow | Bright yellow | Bright yellow | Bright yellow |
| L | 60.1 | 61.3 | 62.3 | 67.1 | 65.0 | 60.1 |
| a | 0.4 | 0.5 | -1.2 | 1.2 | 0.6 | 0.4 |
| b | 30.8 | 31.1 | 31.2 | 30.8 | 30.1 | 30.8 |
| BET value of ITO powder ($m^2$/g) | 71 | 80 | 72 | 72 | 65 | 71 |
| Color tone of ITO powder after modification treatment | Navy blue | Navy blue | Navy blue | Navy blue | Navy blue | Navy blue |
| L | 21.3 | 26.5 | 29.6 | 26.5 | 25.9 | 21.3 |
| a | -2.8 | 4.3 | -4.2 | -3.8 | -3.3 | -2.8 |
| b | -2.3 | -4.9 | -7.2 | -6.1 | -8.8 | -2.3 |
| $N_2$ flow rate ($\mu$m/s) | 50 | 50 | 50 | 50 | 50 | 50 |
| BET value of ITO powder after modification treatment ($m^2$/g) | 55 | 62 | 55 | 56 | 50 | 55 |
| Dry pulverization | In nitrogen | In nitrogen | In nitrogen | In nitrogen | In nitrogen | In air |

Table 2

| | Comparative Example 1 | Comparative Example 2 | Comparative Example 3 | Comparative Example 4 | Comparative Example 5 | Comparative Example 6 |
|---|---|---|---|---|---|---|
| In raw material | $InCl_3$ | $InCl_3$ | $InCl_3$ | $InCl_3$ | $InCl_3$ | $InCl_3$ |
| Sn raw material | $SnCl_4$ | $SnCl_4$ | $SnCl_2$ | $SnCl_2$ | $SnCl_2$ | $SnCl_2$ |
| Aqueous alkali solution | $NH_4HCO_3$ | $NH_4HCO_3$ | $NH_3$ | $NH_3$ | $NH_3$ | $NH_3$ |
| pH of mixed liquid | 8 | 8 30°C | 9.5 | 7 | 7 | 7 |
| Liquid temperature | 30°C | 30°C | 25°C | 30°C | 30°C | 30°C |

(continued)

| | Comparative Example 1 | Comparative Example 2 | Comparative Example 3 | Comparative Example 4 | Comparative Example 5 | Comparative Example 6 |
|---|---|---|---|---|---|---|
| Color tone of coprecipitate | White | White | Yellowish white | Color of persimmon | Color of persimmon | Color of persimmon |
| L | 100 | 100 | 90 | 75.1 | 75.1 | 75.1 |
| a | 0.1 | 0.1 | -0.2 | -1.5 | -1.5 | -1.5 |
| b | | -0.2 | 4.5 | 30.7 | 30.7 | 30.7 |
| Color tone of ITO powder | Olive-green | Olive-green | Olive-green | Bright yellow | Bright yellow | Bright yellow |
| L | 77.8 | 77.8 | 70.2 | 60.1 | 60.1 | 60.1 |
| a | -8.7 | -8.7 | -7.5 | 0.4 | 0.4 | 0.4 |
| b | 27.9 | 27.9 | 28.9 | 30.8 | 30.8 | 30.8 |
| BET value of ITO powder ($m^2$/g) | 45 | 45 | 50 | 71 | 71 | 71 |
| Color tone of ITO powder after modification treatment | Light blue | Light blue | Light blue | Light blue | Light blue | Light blue |
| L | 44.5 | 44.5 | 36.5 | 36.0 | 38.2 | 40.0 |
| a | -3.4 | -3.4 | -2.3 | -1.5 | -2.1 | -2.2 |
| b | -1.0 | -1.0 | -14.3 | -8.1 | -10.1 | -11.5 |
| $N_2$ flow rate ($\mu$m/s) | 50 | 50 | 50 | 5 | 2 | 1 |
| BET value of ITO powder after modification treatment ($m^2$/g) | 35 | 35 | 45 | 30 | 28 | 25 |
| Dry pulverization | In air | In nitrogen | In air | In nitrogen | In nitrogen | In nitrogen |

Table 3

| | Example 1 | Example 2 | Example 3 | Example 4 | Example 5 | Reference Example 1 |
|---|---|---|---|---|---|---|
| Dispersion retention time | 80% | 80% | 80% | 80% | 80% | 80% |
| Median diameter (nm) | 39 | 35 | 41 | 39 | 45 | 40 |
| $D_{90}$ (nm) | 54 | 49 | 58 | 57 | 60 | 57 |
| Total light transmittance of conductive film including glass material | 89.50% | 89.60% | 89.5% | 89.5% | 89.2% | 89.6% |
| | $\Delta$+0.5 | $\Delta$+0.6 | $\Delta$+0.5 | $\Delta$+0.5 | $\Delta$+0.2 | $\Delta$+0.6 |
| Surface resistivity of conductive film ($\Omega$/cm$^2$) | 8000 | 8200 | 8500 | 9000 | 7500 | 9400 |

(continued)

|  | Example 1 | Example 2 | Example 3 | Example 4 | Example 5 | Reference Example 1 |
|---|---|---|---|---|---|---|
| %Tv of dispersion | 90.5% | 89.9% | 90.2% | 90.3% | 89.4% | 90.9% |
| %Ts of dispersion | 59.5% | 59.2% | 59.8% | 59.8% | 59.0% | 60.0% |
| [(%Tv)/(%Ts)] of dispersion | 1.521 | 1.519 | 1.508 | 1.510 | 1.515 | 1.515 |
| Haze | 0.40 | - | - | - | - | - |
| Powder molding test | Good | - | - | - | - | - |

Table 4

|  | Comparative Example 1 | Comparative Example 2 | Comparative Example 3 | Comparative Example 4 | Comparative Example 5 | Comparative Example 6 |
|---|---|---|---|---|---|---|
| Dispersion retention time | 100% | 100% | 100% | 100% | 100% | 100% |
| Median diameter (nm) | 65 | 63 | 48 | 90 | 110 | 121 |
| $D_{90}$(nm) | 87 | 84 | 65 | 130 | 152 | 169 |
| Total light transmittance of conductive film including glass material | 88.0% | 88.2% | 88.9% | - | - | - |
|  | -1.0 | -0.8 | 0 | - | - | - |
| Surface resistivity of conductive film ($\Omega$/cm$^2$) | 15000 | 16000 | 30000 | - | - | - |
| %Tv of dispersion | 84.0% | 85.0% | 89.0% | - | - | - |
| %Ts of dispersion | 64.4% | 64.9% | 62.9% | - | - | - |
| [(%Tv)/(%Ts)] of dispersion | 1.304 | 1.310 | 1.415 | - | - | - |
| Haze | 0.89 | - | - | - | - | - |
| Powder molding test | Poor | - | - | - | - | - |

Table 5

| Sample Name | Target load (N) | Actual load (N) | Vertical stress (N/cm$^2$) | Shear force (N) | Shear stress (N/cm$^2$) | Internal friction angle (°) |
|---|---|---|---|---|---|---|
| Example 1 | 50 | 41 | 5.77 | 21.7 | 3.06 | 27.63 |
|  | 100 | 85 | 11.97 | 48.2 | 6.79 | |
|  | 150 | 134 | 18.87 | 70.5 | 9.93 | |

(continued)

| Sample Name | Target load (N) | Actual load (N) | Vertical stress (N/cm$^2$) | Shear force (N) | Shear stress (N/cm$^2$) | Internal friction angle (°) |
|---|---|---|---|---|---|---|
| Comparative Example 1 | 50 | 37 | 5.21 | 6.5 | 0.92 | 15.54 |
| | 100 | 78 | 10.99 | 17.1 | 2.41 | |
| | 150 | 119 | 16.76 | 29.3 | 4.13 | |

As shown in Tables 1 and 3, all of Examples 1 to 5 were satisfactory in all of the evaluation items. On the contrary, as shown in Tables 2 and 4, in Comparative Examples 1 to 6, all of the ITO powders had high L values, large median diameters and large $D_{90}$ values, low specific surface areas, and long dispersion retention times. In Comparative Examples 1 and 2 where a tin ($Sn^{4+}$) compound was used as the raw material, and in Comparative Example 3 where the pH of the solution used in the step (A) was 9.5, all the property values of the total light transmittance, surface resistivity, and %Tv and %Ts values of the dispersion were poor. Comparative Example 1 had a high haze value and exhibited poor results of the powder molding test. The reason is considered to be that the $N_2$ flow rates were small in Comparative Examples 4 to 6. Reference Example 1 in which the ITO powder was dry pulverized in air exhibited high surface resistivity.

Furthermore, as can be seen from Table 5, Example 1 had higher shear force than that of Comparative Example 1. As can be seen from FIG. 9, it was found that in Example 1, as the vertical stress increased, the increment of the shear stress also increased, consequently the internal friction angle also increased, and the adhesiveness of the powder was enhanced as compared with Comparative Example 1. Therefore, when the ITO powder of the present embodiment was formed into a film, it was found that since the adhesiveness between powder particles was excellent, the film strength was high, and the powder also exhibited excellent moldability.

The ITO powder of the present embodiment has a small particle size and satisfactory dispersibility. That is, in the present embodiment, an ITO powder can be provided which takes a short time when a dispersion is prepared. Furthermore, it was found that a film in which this ITO powder is used exhibits high strength, excellent transparency, and excellent conductivity.

Industrial Applicability

The ITO powder of the present embodiment has a small particle size, a sharp particle size distribution, and high crystallinity. For this reason, in the case where the ITO powder of the present embodiment is used, a conductive coated film can be formed which has very high film strength and exhibits markedly satisfactory conductivity and heat ray-shielding performance. Therefore, the ITO powder of the present embodiment can be suitably applied to a production process for a functional material such as a transparent conductive coated film or a heat ray-shielding film.

**Claims**

1. An indium tin oxide powder,

   wherein in the particle size distribution, the median diameter is in a range of 30 nm to 45 nm and the $D_{90}$ value is in a range of 60 nm or less,
   the specific surface area is in a range of 40 m$^2$/g or greater, and the indium tin oxide powder has a color tone of navy blue with L of 30 or less in a L a b colorimetric system.

2. A dispersion comprising: the indium tin oxide powder according to claim 1; and a solvent.

3. A paint comprising: the indium tin oxide powder according to claim 1; a solvent; and a resin.

4. A functional thin film comprising the indium tin oxide powder according to claim 1.

5. The functional thin film according to claim 4, which is used as a conductive film or a heat ray-shielding film.

6. A method for producing an indium tin oxide powder, the method comprising, in series:

   a step (A) of coprecipitating an indium tin hydroxide by using a tin $Sn^{2+}$ compound and indium trichloride or indium nitrate under conditions where a pH is in a range of 4.0 to 9.3 and a liquid temperature is in a range of 5°C or higher;

a step (B) of drying and calcining the indium tin hydroxide under either one of the following conditions (1) to (3), and thereby, obtaining indium tin oxide; and

a step (C) of dry pulverizing the obtained indium tin oxide in a nitrogen atmosphere, wherein

(1) the indium tin hydroxide is heated in an atmosphere of nitrogen gas only, or in an atmosphere of nitrogen gas containing an alcohol, at a temperature of 250°C to 800°C for 30 minutes to 6 hours, without performing dying in the air,

(2) the indium tin hydroxide is dried at a temperature of 100°C to 110°C for 10 hours in air, and then the indium tin hydroxide is heated in an atmosphere of nitrogen gas only, or in an atmosphere of nitrogen gas containing an alcohol, at a temperature of 250°C to 800°C for 30 minutes to 6 hours,

(3) the indium tin hydroxide is dried and calcined in air, and then the indium tin hydroxide is heated in an atmosphere of nitrogen gas only, or in an atmosphere of nitrogen gas containing an alcohol, at a temperature of 250°C to 800°C for 30 minutes to 6 hours, and

wherein a flow rate of an atmosphere gas is adjusted to a linear velocity of $8 \times 10^{-6}$ m/s or greater that is supplied to the atmosphere of nitrogen gas only or the atmosphere of nitrogen gas containing an alcohol.

7. The method for producing an indium tin oxide powder according to claim 6, wherein in the step (A), the indium tin hydroxide is coprecipitated by simultaneously dripping a mixed aqueous solution of indium trichloride and tin dichloride and an aqueous alkali solution to water.

## Patentansprüche

1. Ein Indiumzinnoxidpulver,

wobei sich bezüglich der Partikelgrößenverteilung der mittlere Durchmesser in einem Bereich von 30 nm bis 45 nm und der $D_{90}$-Wert sich in dem Bereich von 60 nm oder weniger befindet, die spezifische Oberfläche in dem Bereich von 40 $m^2$/g oder mehr liegt, und das Indiumzinnoxidpulver einen marineblauen Farbton mit einem L von 30 oder weniger in einem L*a*b-kolorimetrischen System hat.

2. Eine Dispersion, umfassend: Das Indiumzinnoxidpulver gemäß Anspruch 1; und ein Lösungsmittel.

3. Eine Farbe, umfassend: Das Indiumzinnoxidpulver gemäß Anspruch 1; ein Lösungsmittel; und ein Harz.

4. Eine funktionelle Dünnschicht, die das Indiumzinnoxid gemäß Anspruch 1 umfasst.

5. Die funktionelle Dünnschicht gemäß Anspruch 4, die als eine leitende Schicht oder eine Wärmestrahlung abschirmende Schicht verwendet wird.

6. Ein Verfahren zur Herstellung eines Indiumzinnoxidpulvers, welches der Reihe nach umfasst:

Einen Schritt (A) der Kopräzipitation eines Indiumzinnhydroxids durch die Verwendung einer Zinn-Sn$^{2+}$-Verbindung und Indiumtrichlorids oder Indiumnitrats unter Bedingungen, bei denen sich der pH-Wert in einem Bereich von 4,0 bis 9,3 und die Temperatur der Flüssigkeit sich in einem Bereich von 5 °C oder höher befindet; einen Schritt (B) der Trocknung und des Kalzinierens des Indiumzinnhydroxids unter einer der folgenden Bedingungen (1) bis (3), und des dadurch Indiumzinnoxid Erhaltens; und einen Schritt (C) der trockenen Pulverisierung des erhaltenen Indiumzinnoxids in einer Stickstoffatmosphäre, wobei

(1) das Indiumzinnhydroxid in einer ausschließlich aus Stickstoffgas bestehenden Atmosphäre erhitzt wird, oder in einer Stickstoffgasatmosphäre, die einen Alkohol enthält, bei einer Temperatur von 250 °C bis 800 °C für 30 Minuten bis zu 6 Stunden, ohne die Durchführung einer Trocknung an der Luft,

(2) das Indiumzinnhydroxid bei einer Temperatur von 100 °C bis 110 °C für 10 Stunden an der Luft getrocknet wird, und dann das Indiumzinnhydroxid in einer ausschließlich aus Stickstoffgas bestehenden Atmosphäre, oder in einer Stickstoffgasatmosphäre, die einen Alkohol enthält, bei einer Temperatur von 250 °C bis 800 °C für 30 Minuten bis zu 6 Stunden erhitzt wird,

(3) das Indiumzinnhydroxid an der Luft getrocknet und kalziniert wird, und dann das Indiumzinnhydroxid in einer ausschließlich aus Stickstoffgas bestehenden Atmosphäre, oder in einer Stickstoffgasatmosphäre, die einen Alkohol enthält, bei einer Temperatur von 250 °C bis 800 °C für 30 Minuten bis zu 6 Stunden erhitzt wird, und

wobei die Flussrate des Atmosphärengases auf eine Lineargeschwindigkeit von 8x10$^{-6}$ m/s oder mehr eingestellt wird, mit der in die ausschließlich aus Stickstoffgas bestehende Atmosphäre oder in die Stickstoffgasatmosphäre, die einen Alkohol enthält, eingespeist wird.

7. Das Verfahren zur Herstellung eines Indiumzinnoxidpulvers gemäß Anspruch 6,
wobei das Indiumzinnhydroxid in Schritt (A) dadurch mitgefällt wird, dass gleichzeitig eine gemischte wässrige Lösung von Indiumtrichlorid und Zinndichlorid sowie eine wässrige Alkaliiösung zu Wasser zugetropft werden.

**Revendications**

1. Poudre d'oxyde d'indium et d'étain,
dans laquelle dans la distribution granulométrique, le diamètre moyen est compris dans une plage allant de 30 nm à 45 nm et la valeur $D_{90}$ est inférieure ou égale à 60 nm,
la surface spécifique est supérieure ou égale à 40 m$^2$/g, et la poudre d'oxyde d'indium et d'étain a un ton de couleur bleu marine avec L inférieure ou égale à 30 dans un système colorimétrique L a b.

2. Dispersion comprenant : la poudre d'oxyde d'indium et d'étain selon la revendication 1 ; et un solvant.

3. Peinture comprenant : la poudre d'oxyde d'indium et d'étain selon la revendication 1 ; un solvant ; et une résine.

4. Film mince fonctionnel comprenant la poudre d'oxyde d'indium et d'étain selon la revendication 1.

5. Film mince fonctionnel selon la revendication 4, qui est utilisé en tant que film conducteur ou film de protection contre les rayons thermiques.

6. Procédé de fabrication d'une poudre d'oxyde d'indium et d'étain, le procédé comprenant, en série :

une étape (A) de coprécipitation d'un hydroxyde d'indium et d'étain en utilisant un composé d'étain Sn$^{2+}$ et le trichlorure d'indium ou le nitrate d'indium dans des conditions où le pH est compris dans une plage allant de 4,0 à 9,3 et où une température de liquide est supérieure ou égale à 5°C ;
une étape (B) de séchage et de calcination de l'hydroxyde d'indium et d'étain dans l'une ou l'autre des conditions (1) à (3) suivantes, et ainsi d'obtention de l'oxyde d'indium et d'étain ; et
une étape (C) de pulvérisation à sec de l'oxyde d'indium et d'étain obtenu dans une atmosphère d'azote, dans lequel

(1) l'hydroxyde d'indium et d'étain est chauffé dans une atmosphère d'azote gazeux uniquement, ou dans une atmosphère d'azote gazeux température contenant un alcool, à une température comprise entre 250°C et 800°C pendant 30 minutes à 6 heures, sans effectuer de séchage à l'air,
(2) l'hydroxyde d'indium et d'étain est séché à une température comprise entre 100°C et 110°C pendant 10 heures à l'air, et ensuite l'hydroxyde d'indium et d'étain est chauffé dans une atmosphère d'azote gazeux uniquement, ou dans une atmosphère d'azote gazeux contenant un alcool, à une température comprise entre 250°C et 800°C pendant 30 minutes à 6 heures,
(3) l'hydroxyde d'indium et d'étain est séché et calciné à l'air, et ensuite l'hydroxyde d'indium et d'étain est chauffé dans une atmosphère d'azote gazeux uniquement, ou dans une atmosphère d'azote gazeux contenant un alcool, à une température comprise entre 250°C et 800°C pendant 30 minutes à 6 heures, et

dans lequel un débit d'un gaz atmosphérique est réglé à une vitesse linéaire supérieure ou égale à 8x10$^{-6}$ m/s qui est fourni à l'atmosphère d'azote gazeux uniquement ou à l'atmosphère d'azote gazeux contenant un alcool.

7. Procédé de production d'une poudre d'oxyde d'indium et d'étain selon la revendication 6,

dans lequel, à l'étape (A), l'hydroxyde d'indium et d'étain est coprécipité en versant goutte à goutte simultanément une solution aqueuse mixte de trichlorure d'indium et de dichlorure d'étain et une solution alcaline aqueuse dans l'eau.

FIG. 1

FIG. 2

# FIG. 3

EP 2 634 146 B1

| PARTICLE SIZE (μm) | FREQUENCY (%) | CUMULATIVE SUM (%) |
|---|---|---|
| 0.015 | 0.0 | 0.0 |
| 0.017 | 0.7 | 0.7 |
| 0.020 | 1.3 | 2.0 |
| 0.023 | 2.3 | 4.3 |
| 0.026 | 4.3 | 8.6 |
| 0.030 | 7.9 | 16.5 |
| 0.034 | 13.1 | 29.6 |
| 0.039 | 18.5 | 48.1 |
| 0.044 | 20.6 | 68.7 |
| 0.051 | 17.0 | 85.7 |
| 0.058 | 9.7 | 95.5 |
| 0.067 | 3.7 | 99.1 |
| 0.076 | 0.9 | 100.0 |
| 0.087 | 0.0 | 100.0 |
| 0.100 | 0.0 | 100.0 |
| 0.115 | 0.0 | 100.0 |
| 0.131 | 0.0 | 100.0 |
| 0.150 | 0.0 | 100.0 |

| | | |
|---|---|---|
| $D_{50}$ | 39 | nm |
| $D_{90}$ | 54 | nm |

FIG. 4

| PARTICLE SIZE (μm) | FREQUENCY (%) | CUMULATIVE SUM (%) |
|---|---|---|
| 0.015 | 0.0 | 0.0 |
| 0.017 | 0.0 | 0.0 |
| 0.020 | 0.0 | 0.0 |
| 0.023 | 0.0 | 0.0 |
| 0.026 | 0.0 | 0.0 |
| 0.030 | 0.8 | 0.8 |
| 0.034 | 1.6 | 2.4 |
| 0.039 | 3.3 | 5.7 |
| 0.044 | 6.5 | 12.2 |
| 0.051 | 10.5 | 22.7 |
| 0.058 | 15.1 | 37.8 |
| 0.067 | 21.9 | 59.7 |
| 0.076 | 18.6 | 78.3 |
| 0.087 | 12.5 | 90.8 |
| 0.100 | 6.2 | 97.0 |
| 0.115 | 2.3 | 99.3 |
| 0.131 | 0.6 | 99.9 |
| 0.150 | 0.1 | 100.0 |

| | |
|---|---|
| $D_{50}$ | 65 nm |
| $D_{90}$ | 87 nm |

EP 2 634 146 B1

FIG. 5

22

FIG. 6

INTENSITY(cps)

20.000

40.000

2θ(°)

0.47°

FIG. 7

INTENSITY (cps)

FIG. 8

INTENSITY (cps)

FIG. 9

**EP 2 634 146 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010239442 A
- JP 2007238337 A
- JP 2008110915 A
- JP 3019551 B
- JP 2005322626 A